Europäisches Patentamt

European Patent Office

Office européen des brevets

(19)

(11) Numéro de publication : **0 456 533 A1**

# (12) DEMANDE DE BREVET EUROPEEN

(21) Numéro de dépôt : **91400956.8**

(22) Date de dépôt : **09.04.91**

(51) Int. Cl.⁵ : **F02M 31/12**

(30) Priorité : **09.05.90 FR 9005781**

(43) Date de publication de la demande :
**13.11.91 Bulletin 91/46**

(84) Etats contractants désignés :
**DE ES GB IT SE**

(71) Demandeur : **AUTOMOBILES PEUGEOT**
**75, avenue de la Grande Armée**
**F-75116 Paris (FR)**
Demandeur : **AUTOMOBILES CITROEN**
**62 Boulevard Victor-Hugo**
**F-92200 Neuilly-sur-Seine (FR)**

(72) Inventeur : **Barret, Philippe**
**85, rue du Général Leclerc**
**F-78220 Viroflay (FR)**

(74) Mandataire : **Beauchamps, Georges et al**
**Cabinet Z.Weinstein 20, avenue de Friedland**
**F-75008 Paris (FR)**

(54) Dispositif d'admission pour un moteur à combustion interne à gaz prémélangé.

(57) La présente invention concerne un dispositif d'admission pour un moteur à combustion interne à gaz prélangé.

Le dispositif est caractérisé en ce qu'il comprend un élément chauffant (5) intégré dans la partie inférieure du conduit d'admission (2) se raccordant à la tubulure d'admission (1) et qui est disposé relativement à l'injecteur (4) de façon que les jets de carburant imprègnent pratiquement toute la surface exposée de l'élément chauffant (5).

La présente invention trouve application dans le domaine de l'automobile.

EP 0 456 533 A1

La présente invention concerne un dispositif d'admission pour un moteur à combustion interne à gaz prémélangé du type comprenant un injecteur de carburant disposé dans une tubulure d'admission et un élément chauffant monté en aval de l'injecteur pour réchauffer le mélange d'air et de carburant avant son entrée dans un cylindre du moteur.

On connaît un dispositif du genre ci-dessus où l'élément chauffant est un corps annulaire implanté concentriquement au conduit d'admission se raccordant à la tubulure d'admission, le mélange air-carburant traversant le corps annulaire chauffé électriquement. Selon un autre dispositif connu, le corps annulaire n'occupe plus qu'une partie du conduit d'admission permettant ainsi à l'air de s'écouler également autour de ce corps.

Cependant, ces solutions connues ont pour inconvénient que l'élément chauffant constitue un obstacle au passage des gaz via le conduit d'admission jusque dans le cylindre. Cet obstacle a pour conséquence de créer des pertes de charge qui dégradent les performances du moteur.

La présente invention a pour but de palier les inconvénients ci-dessus en proposant un dispositif d'admission pour un moteur à combustion interne à gaz prémélangé comprenant un injecteur de carburant disposé dans la tubulure d'admission et un élément chauffant monté en aval de l'injecteur pour réchauffer le mélange d'air et de carburant avant son entrée dans le cylindre du moteur et caractérisé en ce que l'élément chauffant est intégré dans la partie inférieure du conduit d'admission se raccordant à la tubulure d'admission et est disposé relativement à l'injecteur de façon que les jets de carburant imprègnent pratiquement toute la surface exposée de l'élément chauffant.

Selon une caractéristique avantageuse de l'invention, l'élément chauffant précité est emprisonné dans une enveloppe thermiquement isolante solidaire de la culasse du moteur de préférence par des vis de fixation.

Selon une autre caractéristique de l'invention, l'élément chauffant est relié à une source d'alimentation par l'intermédiaire de deux conducteurs électriques noyés dans l'enveloppe précitée et électriquement isolante, l'un des conducteurs étant relié à la masse par l'une des vis de fixation de l'enveloppe.

L'élément chauffant est réalisé en un matériau à résistance électrique à coefficient positif de température.

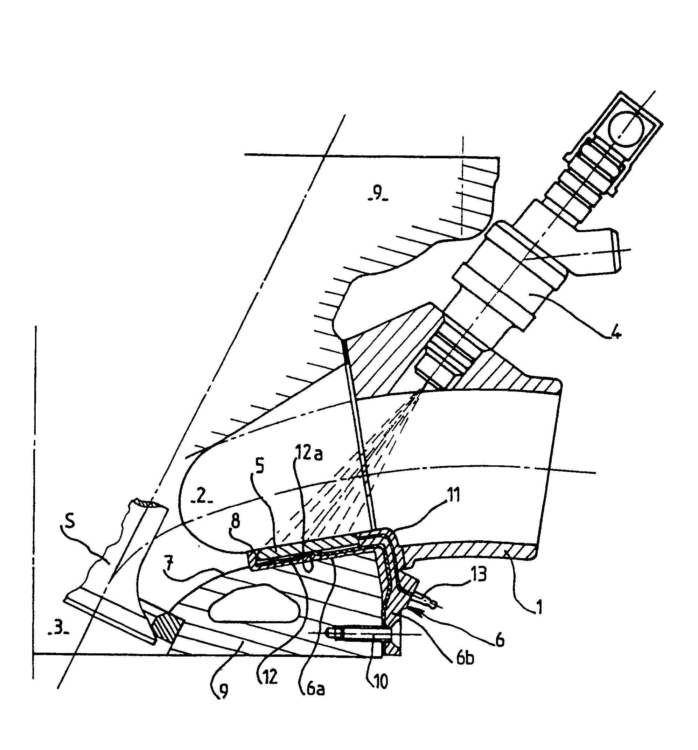

L'invention sera mieux comprise, et d'autres buts, caractéristiques, détails et avantages de celle-ci apparaîtront plus clairement au cours de la description explicative qui va suivre faite en référence au dessin schématique annexé donné uniquement à titre d'exemple illustrant un mode de réalisation de l'invention et dans lequel la figure unique représente une vue schématique en coupe verticale d'un dispositif d'admission conforme à l'invention.

Le dispositif d'admission représenté à la figure comprend une tubulure d'admission 1 se raccordant au conduit d'admission 2 qui débouche dans le cylindre 3 du moteur par l'intermédiaire d'une soupape S représentée partiellement. Le dispositif comprend de plus un injecteur 4 fixé à la tubulure d'admission 1 en aval du papillon d'admission (non représenté). L'injecteur 4 est incliné relativement au sens d'écoulement de l'air de combustion et pulvérise une quantité dosée de carburant dans l'air de combustion. Afin de contribuer à une meilleure qualité de combustion surtout pendant les phases de démarrage à froid et de mise en action du moteur, des éléments chauffants 5, alimentés électriquement, sont disposés respectivement dans les conduits d'admission 2, en aval de l'injecteur 4. Chaque élément chauffant 5, qui est en un matériau à résistance électrique à coefficient de température positif, permet de réchauffer l'air d'admission en aval du papillon d'admission et surtout de réchauffer le carburant pour favoriser ainsi sa vaporisation.

Selon l'invention, chaque élément chauffant 5 est intégré ou rapporté uniquement dans la partie inférieure du conduit d'admission 2 se raccordant à la tubulure 1 et est disposé relativement à l'injecteur 4 de façon que les jets de carburant imprègnent pratiquement toute la surface exposée de l'élément chauffant 5. L'élément chauffant 5 est emprisonné dans une enveloppe 6 thermiquement et électriquement isolante empêchant le dégagement de chaleur de l'élément 5 vers la paroi 7 du conduit d'admission 2. L'enveloppe isolante 6 maintient l'élément chauffant 5 par une forme appropriée. Par exemple, lorsque l'élément chauffant 5 est en forme de plaque épousant le profil de la partie inférieure d'entrée du conduit d'admission 2, la forme de l'enveloppe 6 maintenant l'élément 5 est constituée par une glissière 8 en queue d'aronde dans laquelle est engagé l'élément chauffant 5. L'enveloppe isolante 6 comporte une partie 6b orthogonale à la partie 6a de maintien de l'élément chauffant 5 et qui est plaquée et fixée à la culasse 9 du moteur de préférence par des vis de fixation 10 implantées dans la culasse 9. La connexion de chaque éliment chauffant 5 à la source d'alimentation électrique s'effectue par l'intermédiaire de deux éléments électriquement conducteurs 11 et 12 noyés dans l'enveloppe isolante 6, l'élément 11 étant relié à une borne externe 13 raccordable au pôle positif de la source d'alimentation électrique qui peut être constituée par une batterie d'un véhicule automobile tandis que l'élément 12 est raccordé à la masse par l'intermédiaire des vis de fixation 10 soit en étant plaquée par cette dernière contre la face correspondante de la culasse 9, soit en étant en contact électrique avec une vis 10 en position assemblée de l'enveloppe 6. Les éléments conducteurs 11, 12 peuvent être constitués soit par des fils électriques, soit par des lames métalliques. L'élément 12 est représenté comme comportant un bossage 12a en contact électrique sous l'élément chauffant 5 et l'élément 11 est en contact électrique avec l'élément 5 par l'une de ses faces latérales.

Les éléments chauffants 5 du fait qu'ils assurent la continuité de la paroi inférieure du conduit d'admission 2 n'occasionnent ainsi pas de pertes de charge et ne diminuent donc pas les performances du moteur. De plus, l'ensemble unitaire constitué par une enveloppe 6 et un élément chauffant 5 permet un montage ou un démontage respectivement à ou de la culasse très aisé tout en réalisant en position assemblée de l'enveloppe une bonne isolation thermique de l'élément chauffant 5 et facilitant l'alimentation électrique de cet élément.

## Revendications

1. Dispositif d'admission pour un moteur à combustion interne à gaz prémélangé comprenant un injecteur de carburant (4) disposé dans la tubulure d'admission (1) et un élément chauffant (5) monté en aval de l'injecteur (4) pour réchauffer le mélange d'air et de carburant avant son entrée dans le cylindre du moteur, caractérisé en ce que l'élément (5) est intégré dans la partie inférieure du conduit d'admission (2) se raccordant à la tubulure d'admission (1), est disposé relativement à l'injecteur (4) de façon que les jets de carburant imprègnent pratiquement toute la surface exposée de l'élément chauffant (5) et est emprisonné dans une enveloppe thermiquement isolante (6) solidaire de la culasse (9) du moteur de préférence par des vis de fixation (10).

2. Dispositif selon la revendication 1, caractérisé en ce que l'élément chauffant (5) est relié à une source d'alimentation par l'intermédiaire de deux conducteurs électriques (11, 12) noyés dans l'enveloppe (6) électriquement isolante, l'un (12) des conducteurs (11, 12) étant relié à la masse par l'une des vis de fixation (10) de l'enveloppe (6).

3. Dispositif selon la revendication 1 ou 2, caractérisé en ce que le conducteur électrique (12) précité comprend un bossage (12a) en contact électrique sous l'élément chauffant (5).

4. Dispositif selon l'une des revendications précédentes, caractérisé en ce que l'élément chauffant (5) est réalisé en un matériau à résistance électrique à coefficient positif de température.

5. Dispositif selon l'une des revendications précédentes, caractérisé en ce que l'élément chauffant (5) est en forme de plaque logée dans une glissière en queue d'aronde de l'enveloppe (6)

**Office européen des brevets**

# RAPPORT DE RECHERCHE EUROPEENNE

Numero de la demande

EP 91 40 0956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0343652 (TEXAS INSTRUMENTS ET AL.) <br> * colonne 3, ligne 43 - colonne 4, ligne 23 * <br> * colonne 4, lignes 32 - 41 * <br> * figures 1, 5 * <br> --- | 1, 4 | F02M31/12 |
| Y | US-A-4378001 (TAKEDA ET AL.) <br> * colonne 2, lignes 55 - 64 * <br> * colonne 3, ligne 19 - colonne 4, ligne 20 * <br> * figures 2, 3 * <br> --- | 1, 4 | |
| Y | US-A-4870249 (KAYANUMA ET AL.) <br> * colonne 2, lignes 41 - 42 * | 1, 4 | |
| A | * colonne 2, lignes 59 - 64 * <br> * colonne 3, lignes 1 - 49 * <br> * colonne 4, lignes 23 - 44 * <br> * figures 1, 3-5 * <br> ----- | 2, 3 | |
| | | | **DOMAINES TECHNIQUES RECHERCHES (Int. Cl.5)** <br><br> F02M |

Le présent rapport a été établi pour toutes les revendications

| Lieu de la recherche | Date d'achèvement de la recherche | Examinateur |
|---|---|---|
| BERLIN | 05 AOUT 1991 | NOVELLI B. |